# EUROPEAN PATENT APPLICATION

(11) **EP 4 741 122 A1**
(43) Date of publication of application: **13.05.2026**
(21) Application number: 25201284.4
(22) Date of filing: 10.09.2025
(51) Int. Cl.: B26D 1/24, B26D 7/26

(54) **ELECTRODE PLATE SLITTING APPARATUS AND ELECTRODE PLATE SLITTING METHOD USING THE SAME**

(30) Priority: 12.11.2024 KR 20240159933
(71) Applicant: SAMSUNG SDI CO., LTD., Yongin-si, Gyeonggi-do 17084 (KR)
(72) Inventor: LEE, Junsub, 17084 Yongin-si, Gyeonggi-do (KR); JUN, Pilgoo, 17084 Yongin-si, Gyeonggi-do (KR)
(74) Representative: Michalski Hüttermann & Partner Patentanwälte mbB

(57) **Abstract**

An electrode plate slitting apparatus includes a first cutting unit configured to cut a supplied electrode plate raw material into a plurality of split electrode plates, a second cutting unit configured to cut the plurality of split electrode plates, a sensor unit configured to detect the plurality of split electrode plates supplied to the second cutting unit, resulting in detected split electrode plates, and a control unit configured to receive information about the detected split electrode plates, and control driving of the second cutting unit.

## Description

This application is based on and claims priority to Korean Patent Application No. 10-2024-0159933, filed on November 12, 2024, in the Korean Intellectual Property Office.

### BACKGROUND

### 1. Field

Embodiments relate to an electrode plate slitting apparatus and an electrode plate slitting method using the electrode plate slitting apparatus.

### 2. Description of the Related Art

A secondary battery is formed by inserting an electrode assembly, in which a positive electrode plate, a negative electrode plate, and a separator are wound, into a case and sealing the case with a cap assembly. A positive electrode plate or a negative electrode plate (hereinafter, referred to as an 'electrode plate') is formed to have a coated portion where an active material slurry is coated on an aluminum or copper thin film and an uncoated portion where no coating is applied.

The above information disclosed in this Background section is for enhancement of understanding of the background of the present disclosure, and therefore, it may contain information that does not constitute related (or prior) art.

### SUMMARY

Embodiments include an electrode plate slitting apparatus, including a first cutting unit configured to cut a supplied electrode plate raw material into a plurality of split electrode plates, a second cutting unit configured to cut the plurality of split electrode plates, a sensor unit configured to detect the plurality of split electrode plates supplied to the second cutting unit, resulting in detected split electrode plates, and a control unit configured to receive information about the detected split electrode plates, and control driving of the second cutting unit.

The electrode plate raw material may have coated portions and uncoated portions that are alternated and repeated in a width direction of the electrode plate raw material, and each of the plurality of split electrode plates may include a coated portion of the coated portions and an uncoated portion of the uncoated portions.

The first cutting unit may include a plurality of splitting knives having a slitting width corresponding to a width of the plurality of split electrode plates, and the plurality of splitting knives may be spaced apart from each other with spacers therebetween.

The electrode plate raw material may have coated portions and uncoated portions, the sensor unit may be further configured to detect a boundary line between a coated portion of the coated portions and an uncoated portion of the uncoated portions of each of the plurality of split electrode plates, and the control unit may be further configured to compensate and drive and control the second cutting unit according to an error in the boundary line detected by the sensor unit.

The plurality of split electrode plates may be alternately separated in different directions prior to cutting by the second cutting unit, and the second cutting unit may include a plurality of slitting lines arranged on paths along which the plurality of split electrode plates are separated, respectively.

Each of the plurality of slitting lines may include a coated-side knife configured to slit one side of the coated portion of each of the plurality of split electrode plates, and an uncoated-side knife configured to slit one side of the uncoated portion of each of the plurality of split electrode plates.

The coated-side knife and the uncoated-side knife may be independently driven and controlled.

The sensor unit may include a plurality of sensor units configured to respectively detect the plurality of split electrode plates supplied to the plurality of slitting lines.

The electrode plate slitting apparatus may further include an alignment unit configured to adjust alignment of the supplied electrode plate raw material.

The alignment unit may be further configured to adjust the alignment of the supplied electrode plate raw material based on the information about the plurality of split electrode plates detected by the sensor unit.

Embodiments include an electrode plate slitting method, including supplying an electrode plate raw material to a first cutting unit, cutting, by the first cutting unit, the electrode plate raw material into a plurality of split electrode plates, supplying the plurality of split electrode plates to a second cutting unit, cutting, by the second cutting unit, the plurality of split electrode plates, detecting, by a sensor unit, the plurality of split electrode plates supplied to the second cutting unit, and controlling, by a control unit, driving of the second cutting unit based on information about the plurality of split electrode plates detected by the sensor unit.

The electrode plate raw material may have coated portions and uncoated portions that are alternately and repeatedly arranged in a width direction, and each of the plurality of split electrode plates comprises a coated portion of the coated portions and an uncoated portion of the uncoated portions.

The first cutting unit may include a plurality of splitting knives having a slitting width corresponding to a width of the plurality of split electrode plates, and the plurality of splitting knives may be arranged to be spaced apart from each other with spacers therebetween.

The electrode plate slitting method may further include detecting, by the sensor unit, a boundary line between a coated portion and an uncoated portion of each of the plurality of split electrode plates, and compensating, driving and controlling the second cutting unit according to an error in the boundary line detected by the sensor unit.

The electrode plate slitting method may further include alternately separating the plurality of split electrode plates, resulting in separated split electrode plates, in different directions and supplying the separated split electrode plates to the second cutting unit, wherein the second cutting unit includes a plurality of slitting lines arranged on paths along which the plurality of split electrode plates are separated, respectively.

The electrode plate slitting method may further include slitting, by a coated-side knife, one side of the coated portion of each of the plurality of split electrode plates, and slitting, by an uncoated-side knife, one side of the uncoated portion of each of the plurality of split electrode plates.

The electrode plate slitting method may further include independently driving and controlling the coated-side knife and the uncoated-side knife.

The detecting may include detecting, by a plurality of sensor units, the split electrode plates supplied to the plurality of slitting lines.

The electrode plate slitting method may further include adjusting, by an alignment unit, alignment of the electrode plate raw material supplied to the first cutting unit.

The alignment unit may be further configured to adjust the alignment of the electrode plate raw material supplied to the first cutting unit based on the information about the plurality of split electrode plates detected by the sensor unit.

### BRIEF DESCRIPTION OF THE DRAWINGS

Features will become apparent to those of ordinary skill in the art by describing in detail exemplary embodiments with reference to the attached drawings, in which:
FIG. 1 is a configuration diagram illustrating an electrode plate slitting apparatus according to an embodiment of the present disclosure;
FIG. 2 is a plan view illustrating an electrode plate raw material of FIG. 1;
FIG. 3 is a front view illustrating a first cutting unit of FIG. 1;
FIG. 4 is a plan view illustrating split electrode plates before and after cutting by a second cutting unit of FIG. 1;
FIG. 5 is a perspective view illustrating an electrode plate separating unit of FIG. 1;
FIG. 6 is a front configuration diagram illustrating an upper slitting line and a lower slitting line of the second cutting unit of FIG. 1;
FIG. 7 is a rear perspective view illustrating an upper winding unit and a lower winding unit of FIG. 1; and
FIG. 8 is a flowchart of an electrode plate slitting method according to an embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

It will be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, embodiments described herein and components illustrated in the drawings are only the most preferred embodiments of the present disclosure and do not represent all aspects of the technical spirit of the present disclosure, and thus, it should be understood that various equivalents and modifications that may replace them may be made at the time of filing of the present disclosure.

In addition, it will be further understood that the terms "includes", "comprises" and/or "including", "comprising" used herein specify the presence of stated shapes, numbers, processes, members, components, and/or groups thereof, but do not preclude the presence or addition of one or more other shapes, numbers, operations, members, components, and/or groups thereof.

In addition, in order to help understanding of the present disclosure, the accompanying drawings are not drawn to scale, and the dimensions of some components may be exaggerated. In addition, the same reference numerals may be assigned to the same elements in different embodiments.

When it is described that two objects are 'identical', this means that these objects are 'substantially identical'. Accordingly, the substantially identical objects may include deviations considered low in the art, for example, deviations within 5 %. In addition, when it is described that certain parameters are uniform in a region, this may mean that the parameters are uniform in terms of an average in the corresponding region.

Although the terms 'first', 'second', and the like are used to describe different elements, these elements are not limited by the terms. These terms are used to distinguish one element from another, and unless stated otherwise, a first element may be a second element.

Throughout the specification, unless stated otherwise, each element may be singular or plural.

When an element is referred to as being arranged "above (or under)" or "on (or below)" another element, the element may be arranged on an upper surface (or a lower surface) of the other element, and an intervening element may be arranged between the element and the other element on (or below) the element.

In addition, when an element is referred to as being "connected", "coupled", or "linked" to another element, it should be understood that the element may be directly connected or coupled to the other element, but an intervening element may be "interposed" between the elements, or the elements may be "connected", "coupled", or "linked" to each other through another element. In addition, when a part is referred to as being "electrically coupled" to another part, the part may be directly connected to the other part or may be connected to the other part through an intervening element therebetween.

Throughout the specification, "A and/or B" refers to A, B, or both A and B unless stated otherwise. That is, "and/or" includes all or any combination of the listed items. "C to D" includes values greater than or equal to C but less than or equal to D, unless stated otherwise.

The terminology used herein is for the purpose of describing embodiments of the present disclosure, and is not intended to limit the present disclosure.

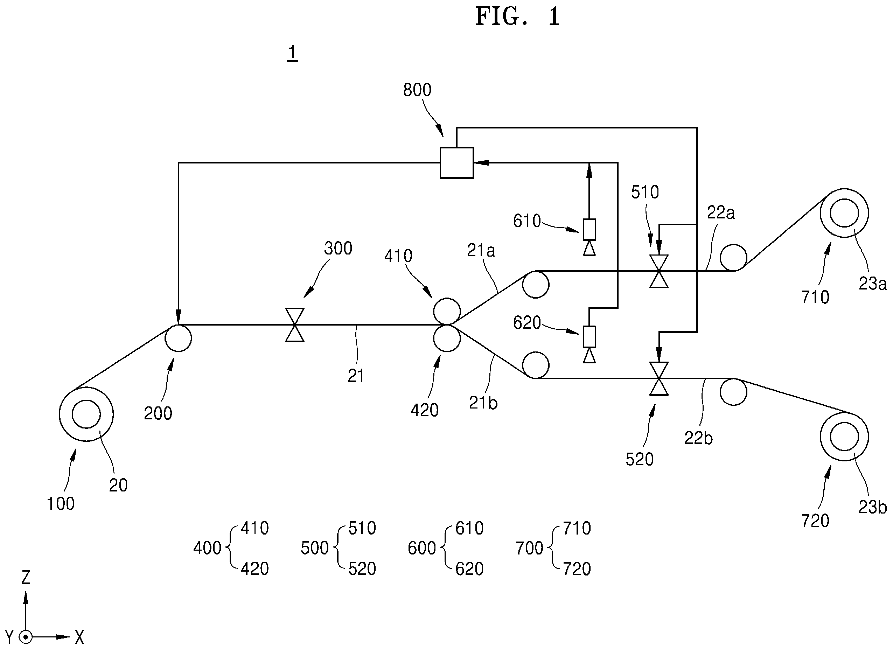

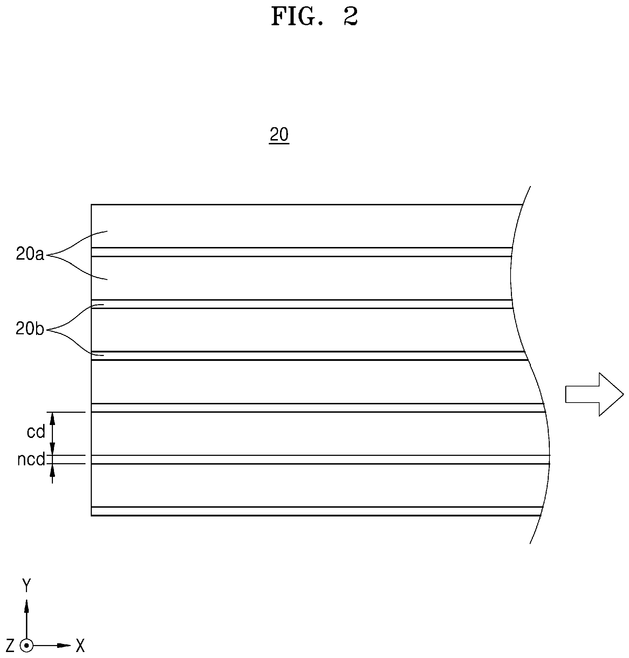

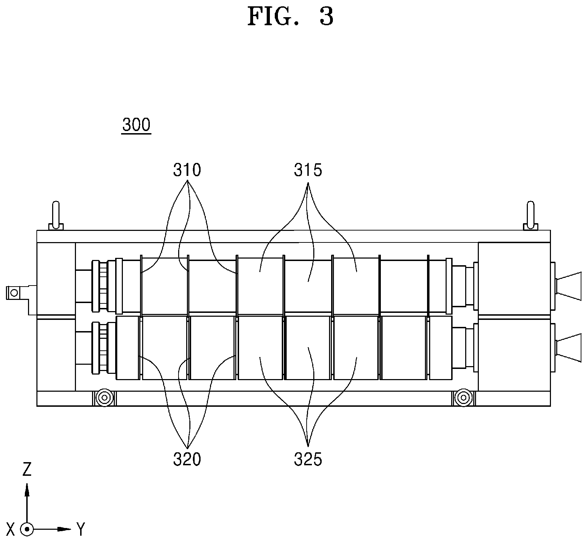

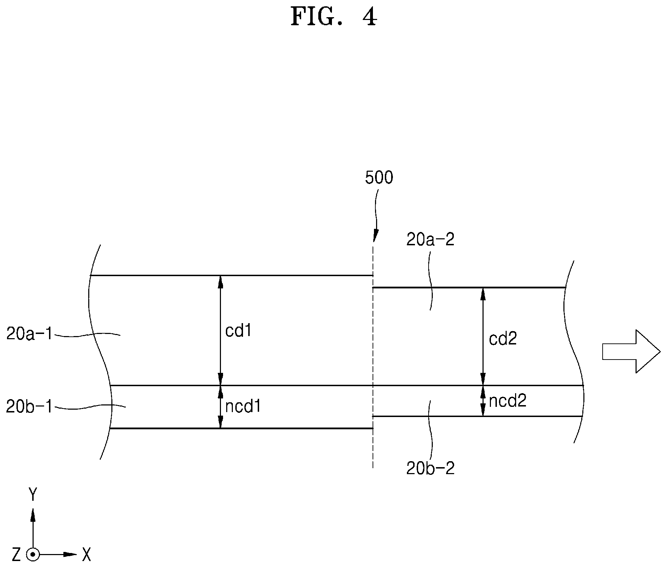

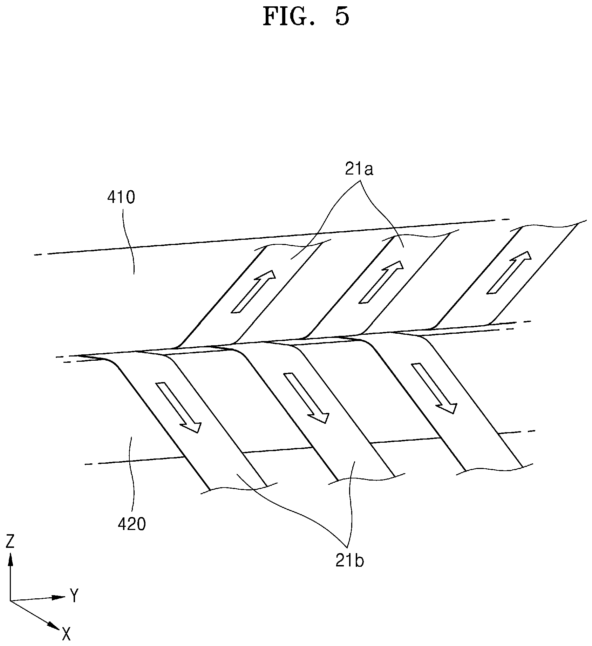

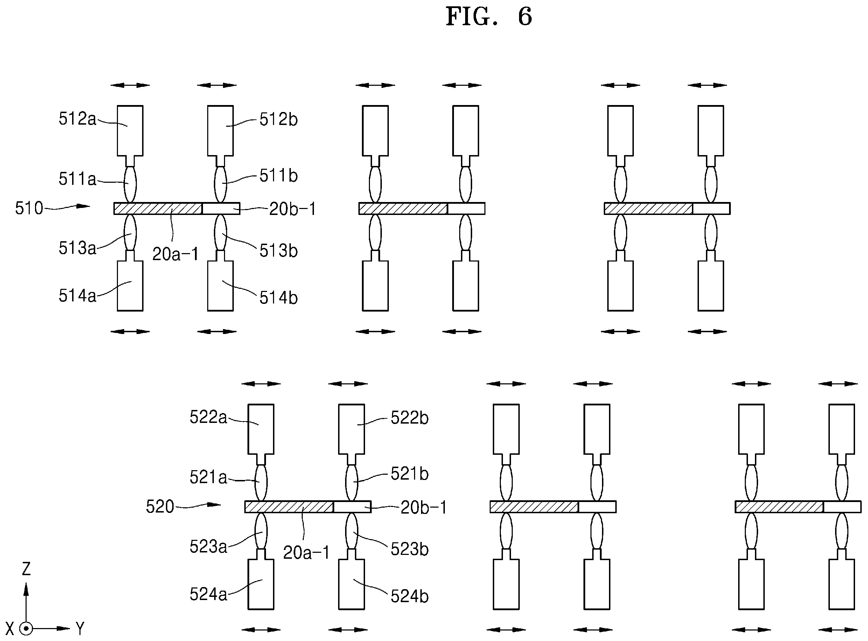

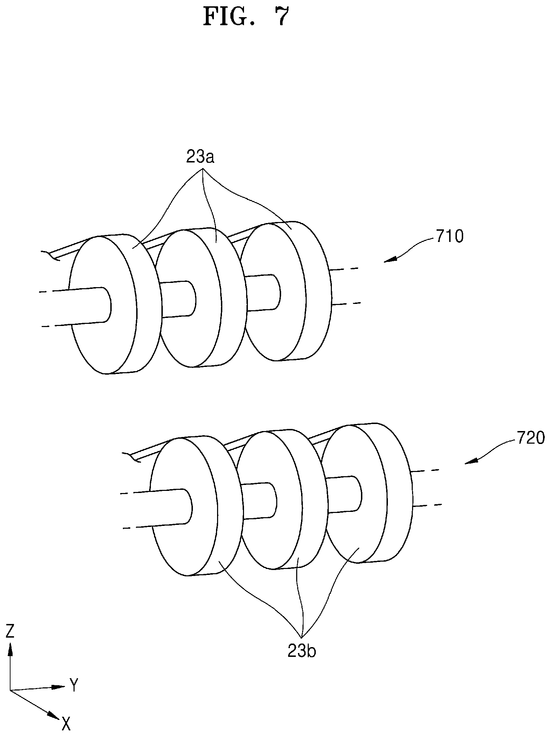

FIG. 1 is a configuration diagram illustrating an electrode plate slitting apparatus according to an embodiment of the present disclosure. FIG. 2 is a plan view illustrating an electrode plate raw material of FIG. 1. FIG. 3 is a front view illustrating a first cutting unit of FIG. 1. FIG. 4 is a plan view illustrating split electrode plates before and after cutting by a second cutting unit of FIG. 1. FIG. 5 is a perspective view illustrating an electrode plate separating unit of FIG. 1. FIG. 6 is a front configuration diagram illustrating an upper slitting line and a lower slitting line of the second cutting unit of FIG. 1. FIG. 7 is a rear perspective view illustrating an upper winding unit and a lower winding unit of FIG. 1.

Referring to FIG. 1, an electrode plate slitting apparatus 10 according to an embodiment of the present disclosure may include a raw material loading unit 100, an alignment unit 200, a first cutting unit 300, an electrode plate separating unit 400, a second cutting unit 500, a sensor unit 600, a winding unit 700, and a control unit 800.

The electrode plate slitting apparatus 10 according to an embodiment of the present disclosure may have a multi-stage cutting structure that primarily cuts an electrode plate raw material 20 into a plurality of split electrode plates 21 through the first cutting unit 300, and independently secondarily cuts a plurality of split electrode plates 21a and a plurality of split electrode plates 21b through the second cutting unit 500.

The electrode plate slitting apparatus 10 according to an embodiment of the present disclosure may detect, through the sensor unit 600, the plurality of split electrode plates 21a and the plurality of split electrode plates 21b being supplied to the second cutting unit 500 after the primary cutting by the first cutting unit 300, and the control unit 800 may receive information about the plurality of split electrode plates 21a and the plurality of split electrode plates 21b detected by the sensor unit 600 to drive and control the second cutting unit 500.

For example, when the plurality of split electrode plates 21a and the plurality of split electrode plates 21b cut at the first cutting unit 300 are skewed to one side in the width direction (the Y-axis direction in FIG. 1) and supplied to the second cutting unit 500, the sensor unit 600 may detect this situation and the control unit 800 may drive and control the second cutting unit 500 based on information detected by the sensor unit 600.

Thus, even when the plurality of split electrode plates 21a and the plurality of split electrode plates 21b are skewed to one side in the width direction (Y-axis direction in FIG. 1) and improperly supplied to the second cutting unit 500, the control unit 800 may compensate and adjust a slitting position of the second cutting unit 500 such that the plurality of split electrode plates 21a and the plurality of split electrode plates 21b are accurately slit to a required (e.g., predetermined) width by the second cutting unit 500.

Referring to FIGS. 1 and 2, according to an embodiment of the present disclosure, the electrode plate raw material 20 may be rotatably loaded on the raw material loading unit 100 for a slitting process.

The raw material loading unit 100 may include a roller having a rotation shaft, and the electrode plate raw material 20 wound in a coil shape may be detachably loaded on the raw material loading unit 100.

The electrode plate raw material 20 loaded on the raw material loading unit 100 may be supplied to the alignment unit 200 in the unwinding direction (the X-axis direction in FIG. 1), and the electrode plate raw material 20 supplied to the alignment unit 200 may be supplied to the first cutting unit 300 to perform a primary slitting process.

The electrode plate raw material 20 may have coated portions 20a and uncoated portions 20b alternately and repeatedly arranged in the width direction (the Y-axis direction in FIG. 2), and may be wound into a coil shape.

The electrode plate raw material 20 may be loaded on the raw material loading unit 100 such that the unwinding direction (the X-axis direction in FIG. 2) coincides with the direction of the slitting process (the X-axis direction in FIG. 1).

For example, the coated portion 20a may be a portion where a slurry is coated on a current collector, and the uncoated portion 20b may be a portion where a slurry is not coated on the current collector, which is later formed into a tab. The coated portion 20a and the uncoated portion 20b of the electrode plate raw material 20 may have predetermined widths cd and ncd, respectively.

The coated portion 20a and the uncoated portion 20b of the electrode plate raw material 20 may be continuously formed in the unwinding direction (the X-axis direction in FIG. 2).

The alignment unit 200 according to an embodiment of the present disclosure may be a unit that supplies the electrode plate raw material 20 unwound from the raw material loading unit 100 to the first cutting unit 300, and may apply, for example, center position control (CPC) or edge position control (EPC).

For example, the alignment unit 200 may be applied with a system such as CPC or EPC such that the electrode plate raw material 20 unwound from the raw material loading unit 100 may be supplied to the first cutting unit 300 while having an accurate direction.

Referring to FIGS. 1 to 4, the first cutting unit 300 according to an embodiment of the present disclosure may cut the electrode plate raw material 20 supplied from the alignment unit 200, into a plurality of split electrode plates 21.

The first cutting unit 300 may cut the electrode plate raw material 20 into a plurality of split electrode plates 21, each including a pair of a coated portion 20a-1 and an uncoated portion 20b-1.

The coated portion 20a-1 and the uncoated portion 20b-1 of each of the plurality of split electrode plates 21 that is cut by the first cutting unit 300 may have predetermined widths cd1 and ncd1, respectively.

For example, the width cd1 of the coated portion 20a-1 and the width ncd1 of the uncoated portion 20b-1 of each of the plurality of split electrode plates 21 may be less than the widths cd and ncd of the coated portion 20a and the uncoated portion 20b of the electrode plate raw material 20, respectively.

The first cutting unit 300 (see FIG. 3) may include a plurality of upper splitting knives 310 and a plurality of lower splitting knives 320, each splitting knife having a slitting width corresponding to (e.g., similar or the same as) the width (cd1+ncd1) (e.g., the total width) of the plurality of split electrode plates 21.

The plurality of upper splitting knives 310 and the plurality of lower splitting knives 320 may include a pair of an upper splitting knife 310 and a lower splitting knife 320 in the vertical direction (the Z-axis direction in FIG. 3), and the pair of upper and lower splitting knives 310 and 320 may rotate in contact with each other to form one cutting point.

A plurality of upper splitting knives 310 may be arranged to be spaced apart from each other in the width direction (the Y-axis direction in FIG. 3) of the electrode plate raw material 20 by upper spacers 315, and a plurality of lower splitting knives 320 may be arranged to be spaced apart from each other in the width direction of the electrode plate raw material 20 by lower spacers 325.

Thus, the first cutting unit 300 may form a plurality of cutting points spaced apart from each other in the width direction (the Y-axis direction in FIG. 3) of the electrode plate raw material 20, and a pair of cutting points adjacent to each other on the left and right sides in the width direction of the electrode plate raw material 20 may correspond to (e.g., equal) one of the plurality of split electrode plates 21.

For example, the distance between a pair of cutting points of the first cutting unit 300 may be equal to the sum of the width cd1 of the coated portion 20a-1 and the width ncd1 of the uncoated portion 20b-1 of each of the plurality of split electrode plates 21 (i.e., cd1+ncd1).

Accordingly, the electrode plate raw material 20 supplied to the first cutting unit 300 may be cut into a plurality of split electrode plates 21 through the plurality of upper splitting knives 310 and the plurality of lower splitting knives 320, and the remaining portion of the electrode plate raw material 20 except for the plurality of split electrode plates 21 may be scrapped.

Referring to FIGS. 1 and 5, the electrode plate separating unit 400 according to an embodiment of the present disclosure may alternately classify the plurality of split electrode plates 21 cut and discharged from the first cutting unit 300 in different directions and supply them to the second cutting unit 500.

For example, the electrode plate separating unit 400 may include an upper roller 410 and a lower roller 420. The plurality of split electrode plates 21 cut and discharged from the first cutting unit 300 may be classified upward and downward (with respect to the Z-axis in FIG. 5) through the upper roller 410 and the lower roller 420 of the electrode plate separating unit 400.

For example, the plurality of split electrode plates 21 cut and discharged from the first cutting unit 300 may be discharged in a plurality of rows from right to left in the width direction (the Y-axis direction in FIG. 5).

For example, the plurality of split electrode plates 21a in the odd-numbered rows may be classified (e.g., guided) upward through the upper roller 410, and the plurality of split electrode plates 21b in the even-numbered rows may be classified downward through the lower roller 420.

The slitting apparatus 10 according to an embodiment of the present disclosure may classify (e.g., forward) the plurality of split electrode plates 21 in different directions through the electrode plate separating unit 400 and supply the plurality of split electrode plates 21 to the second cutting unit 500, and accordingly, the second cutting unit 500 may individually adjust the slitting width of each of the plurality of split electrode plates 21a and the plurality of split electrode plates 21b, thereby minimizing slitting defects.

Referring to FIGS. 1, 4, and 6, the second cutting unit 500 according to an embodiment of the present disclosure performs a slitting process of secondarily cutting the plurality of split electrode plates 21a and the plurality of split electrode plates 21b supplied from the electrode plate separating unit 400 to a preset width (cd2+ncd2).

The second cutting unit 500 may include a plurality of slitting lines 510 and a plurality of slitting lines 520 that cut the plurality of split electrode plates 21a and the plurality of split electrode plates 21b that are classified and supplied in different directions through the electrode plate separating unit 400.

For example, the second cutting unit 500 may include an upper slitting line 510 of the plurality of slitting lines 510 that slits the plurality of split electrode plates 21a in the odd-numbered rows supplied through the upper roller 410 of the electrode plate separating unit 400, and a lower slitting line 520 that slits the plurality of split electrode plates 21b in the even-numbered rows supplied through the lower roller 420 of the electrode plate separating unit 400.

The upper slitting line 510 may include coated-side knives 511a and 513a that slit one side of the coated portions 20a-1 of the plurality of split electrode plates 21a in the odd-numbered rows, and uncoated-side knives 511b and 513b that slit one side of the uncoated portion 20b-1 of the plurality of split electrode plates 21a in the odd-numbered rows.

The coated-side knives 511a and 513a of the upper slitting line 510 may include a pair of an upper coated-side knife 511a and a lower coated-side knife 513a in the vertical direction (the Z-axis direction in FIG. 6).

The uncoated-side knives 511b and 513b of the upper slitting line 510 may include a pair of an upper uncoated-side knife 511b and a lower uncoated-side knife 513b in the vertical direction (the Z-axis direction in FIG. 6).

The coated-side knives 511a and 513a and the uncoated-side knives 511b and 513b of the upper slitting line 510 may be independently driven and controlled.

For example, a pair of the coated-side knives 511a and 513a may be respectively connected to coated-side driving units 512a and 514a in the vertical direction (the Z-axis direction in FIG. 6), and a pair of uncoated-side knives 511b and 513b may be respectively connected to uncoated-side driving units 512b and 514b in the vertical direction (the Z-axis direction in FIG. 6).

For example, the coated-side driving units 512a and 514a and the uncoated-side driving units 512b and 514b may include respective servomotors that may be individually controlled through the control unit 800, and they may be arranged to reciprocate on one guide rail extending in the width direction (the Y-axis direction in FIG. 6).

For example, the coated-side driving units 512a and 514a and the uncoated-side driving units 512b and 514b may individually rotate the pair of coated-side knives 511a and 513a and the uncoated-side knives 511b and 513b, respectively, while reciprocating in the width direction (the Y-axis direction in FIG. 6).

For example, the pair of coated-side knives 511a and 513a may rotate in contact with each other to form one cutting point, and the pair of uncoated-side knives 511b and 513b may also rotate in contact with each other to form one cutting point.

The distance between the cutting point of the pair of coated-side knives 511a and 513a and the cutting point of the pair of uncoated-side knives 511b and 513b in the width direction (the Y-axis direction in FIG. 6) may be set to be equal to a required (e.g., predetermined) slitting width (cd2+ncd2) of the plurality of split electrode plates 21a in the odd-numbered rows.

For example, a pair of coated-side driving units 512a and 514a and a pair of uncoated-side driving units 512b and 514b may reciprocate in the width direction (the Y-axis direction in FIG. 6) under driving and controlling of the control unit 800.

Thus, when the plurality of split electrode plates 21a in the odd-numbered rows are skewed in the width direction (the Y-axis direction in FIG. 6) and supplied to the upper slitting line 510, the pair of coated-side driving units 512a and 514a and the pair of uncoated-side driving units 512b and 514b may be moved in the direction in which the split electrode plates 21a are skewed, to perform slitting under driving and controlling of the control unit 800.

Accordingly, even when the plurality of split electrode plates 21a in the odd-numbered rows are skewed in the width direction and supplied to the upper slitting line 510, the split electrode plates 21a may be slit such that coated portions 20a-2 and uncoated portions 20b-2 have required (e.g., predetermined) widths cd2 and ncd2, respectively.

Referring to FIGS. 1, 4, and 6, the lower slitting line 520 may include coated-side knives 521a and 523a that slit one side of the coated portions 20a-1 of the plurality of split electrode plates 21b in the even-numbered rows, and uncoated-side knives 521b and 523b that slit one side of the uncoated portions 20b-1 of the plurality of split electrode plates 21b in the even-numbered rows.

The coated-side knives 521a and 523a of the lower slitting line 520 may include a pair of an upper coated-side knife 521a and a lower coated-side knife 523a in the vertical direction (the Z-axis direction in FIG. 6).

The uncoated-side knives 521b and 523b of the lower slitting line 520 may include a pair of an upper uncoated-side knife 521b and a lower uncoated-side knife 523b in the vertical direction (the Z-axis direction in FIG. 6).

The coated-side knives 521a and 523a and the uncoated-side knives 521b and 523b of the lower slitting line 520 may be independently driven and controlled.

For example, a pair of coated-side knives 521a and 523a may be respectively connected to coated-side driving units 522a and 524a in the vertical direction (the Z-axis direction in FIG. 6), and a pair of uncoated-side knives 521b and 523b may be respectively connected to uncoated-side driving units 522b and 524b in the vertical direction (the Z-axis direction in FIG. 6).

For example, the coated-side driving units 522a and 524a and the uncoated-side driving units 522b and 524b may include respective servomotors that may be individually controlled through the control unit 800, and may be arranged to reciprocate on one guide rail extending in the width direction (the Y-axis direction in FIG. 6).

For example, the coated-side driving units 522a and 524a and the uncoated-side driving units 522b and 524b may individually rotate the coated-side knives 521a and 523a and the uncoated-side knives 521b and 523b, respectively, while reciprocating in the width direction (the Y-axis direction in FIG. 6).

For example, the pair of coated-side knives 521a and 523a may rotate in contact with each other to form one cutting point, and the pair of uncoated-side knives 521b and 523b may also rotate in contact with each other to form one cutting point.

The distance between the cutting point of the pair of coated-side knives 521a and 523a and the cutting point of the pair of uncoated-side knives 521b and 523b in the width direction (the Y-axis direction in FIG. 6) may be set to be equal to the required (e.g., predetermined) slitting width (cd2+ncd2) of the plurality of split electrode plates 21b in the even-numbered rows.

For example, a pair of coated-side driving units 522a and 524a and a pair of uncoated-side driving units 522b and 524b may reciprocate in the width direction (the Y-axis direction in FIG. 6) under driving and controlling of the control unit 800.

Thus, when the plurality of split electrode plates 21b in the even-numbered rows are skewed in the width direction (the Y-axis direction in FIG. 6) and supplied to the lower slitting line 520, the pair of coated-side driving units 522a and 524a and the pair of uncoated-side driving units 522b and 524b may be moved in the direction in which the split electrode plates 21b are skewed, to perform slitting under driving and controlling of the control unit 800.

Accordingly, even when the plurality of split electrode plates 21b in the even-numbered rows are skewed in the width direction and supplied to the lower slitting line 520, the split electrode plates 21b may be slit such that coated portions 20a-2 and uncoated portions 20b-2 have required widths cd2 and ncd2, respectively.

Referring to FIGS. 1, 4, and 6, the sensor unit 600 according to an embodiment of the present disclosure may detect the plurality of split electrode plates 21a and the plurality of split electrode plates 21b supplied to the second cutting unit 500.

For example, the sensor unit 600 may detect boundary lines between the coated portions 20a-1 and the uncoated portions 20b-1 of the plurality of split electrode plates 21a and the plurality of split electrode plates 21b and deliver the boundary lines to the control unit 800, and the control unit 800 may drive and control the second cutting unit 500 according to degrees to which the plurality of split electrode plates 21a and the plurality of split electrode plates 21b are skewed in the width direction (the Y-axis direction in FIG. 4), which correspond to a detection signal from the sensor unit 600.

The sensor unit 600 may include an upper sensor unit 610 configured to detect the split electrode plate 21a supplied to the upper slitting line 510, and a lower sensor unit 620 configured to detect the split electrode plate 21b supplied to the lower slitting line 520.

For example, the upper sensor unit 610 may detect the plurality of split electrode plates 21a in the odd-numbered rows that are classified and supplied from the upper roller 410 to the upper slitting line 510, and the lower sensor unit 620 may detect the plurality of split electrode plates 21b in the even-numbered rows that are classified and supplied from the lower roller 420 to the lower slitting line 520.

The upper sensor unit 610 may detect the boundary lines between the coated portions 20a-1 and the uncoated portions 20b-1 of the plurality of split electrode plates 21a in the odd-numbered rows, and deliver a detection signal to the control unit 800, and the lower sensor unit 620 may detect the boundary lines between the coated portions 20a-1 and the uncoated portions 20b-1 of the plurality of split electrode plates 21b in the even-numbered rows, and deliver a detection signal to the control unit 800.

For example, the upper sensor unit 610 and the lower sensor unit 620 may each include a charge-coupled device (CCD) camera, but various vision devices capable of detecting the boundary lines between the coated portions 20a-1 and the uncoated portions 20b-1 of the plurality of split electrode plates 21a and the plurality of split electrode plates 21b may be applied.

Referring to FIGS. 1, 4, and 7, the winding unit 700 according to an embodiment of the present disclosure may include an upper winding unit 710 and a lower winding unit 720.

The upper winding unit 710 may individually wind split electrode plates 21a in the odd-numbered rows, which are slit by the upper slitting line 510, to form a plurality of coil electrode plates 23a.

The plurality of coil electrode plates 23a wound and formed by the upper winding unit 710 may include coated portions 20a-2 having a constant width cd2 and uncoated portions 20b-2 having a constant width ncd2.

The lower winding unit 720 may individually wind split electrode plates 22b in the even-numbered rows, which are slit by the lower slitting line 520, to form a plurality of coil electrode plates 23b.

The plurality of coil electrode plates 23b wound and formed by the lower winding unit 720 may also include coated portions 20a-2 having a constant width cd2 and uncoated portions 20b-2 having a constant width ncd2.

The plurality of coil electrode plates 23a and 23b wound on the upper winding unit 710 and the lower winding unit 720 may be formed into products such as electrode plates for pouch-type or prismatic batteries by performing subsequent processes such as notching.

Referring to FIGS. 1, 4, and 6, the control unit 800 according to an embodiment of the present disclosure may receive detection information about the plurality of split electrode plates 21a and the plurality of split electrode plates 21b detected by the sensor unit 600 and drive and control the second cutting unit 500.

For example, the plurality of split electrode plates 21a and the plurality of split electrode plates 21b supplied to the second cutting unit 500 may be skewed to one side in the width direction (the Y-axis direction in FIG. 6) due to slitting width defects in the first cutting unit 300 or slurry coating width errors in a process of forming the coated portions.

For example, the sensor unit 600 may detect boundary lines between the coated portions 20a-1 and the uncoated portions 20b-1 of the plurality of split electrode plates 21a and the plurality of split electrode plates 21b, and transmit the boundary lines to the control unit 800.

The control unit 800 may determine the skew of the plurality of split electrode plates 21a and the plurality of split electrode plates 21b in the width direction (the Y-axis direction in FIG. 1) based on an error in the boundary lines detected by the sensor unit 600, and compensate and control a slitting position of the second cutting unit 500.

Thus, even when the plurality of split electrode plates 21a and the plurality of split electrode plates 21b are skewed to one side in the width direction (Y-axis direction in FIG. 1) and improperly supplied to the second cutting unit 500, the control unit 800 may compensate and adjust a slitting position of the second cutting unit 500 such that the plurality of split electrode plates 21a and the plurality of split electrode plates 21b are accurately slit to a required width by the second cutting unit 500.

For example, the control unit 800 according to an embodiment of the present disclosure may receive information about the plurality of split electrode plates 21a and the plurality of split electrode plates 21b detected by the sensor unit 600, and drive and control the alignment unit 200.

For example, the control unit 800 may receive information about the plurality of split electrode plates 21a and the plurality of split electrode plates 21b detected by the sensor unit 600, and determine the skew of the plurality of split electrode plates 21a and the plurality of split electrode plates 21b in the width direction (the Y-axis direction in FIG. 4).

The control unit 800 may determine the skew of the plurality of split electrode plates 21a and the plurality of split electrode plates 21b in the width direction, and drive and control the alignment unit 200 in the direction opposite to the skew of the plurality of split electrode plates 21a and the plurality of split electrode plates 21b.

The control unit 800 may further improve the precision of the slitting width in the second cutting unit 500 by adjusting the position, in the width direction (the Y-axis direction in FIG. 1), of the electrode plate raw material 20 supplied to the first cutting unit 300, through the alignment unit 200.

Hereinafter, an electrode plate slitting method according to an embodiment of the present disclosure will be described in more detail with reference to the accompanying drawings.

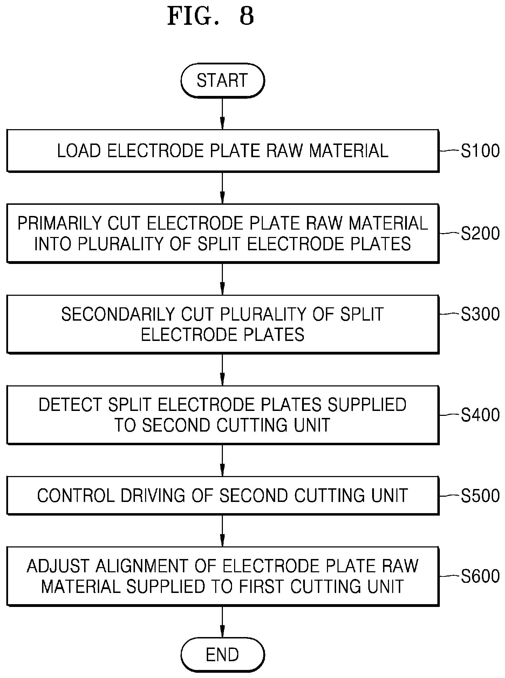

FIG. 8 is a flowchart of an electrode plate slitting method according to an embodiment of the present disclosure.

Referring to FIGS. 1 and 8, the electrode plate slitting method according to an embodiment of the present disclosure may include loading an electrode plate raw material 20 (S100), primarily cutting the electrode plate raw material 20 into a plurality of split electrode plates 21 (S200), secondarily cutting the plurality of split electrode plates 21 (S300), detecting split electrode plates 21a and 21b supplied to the second cutting unit 500 (S400), compensating and controlling the driving of the second cutting unit 500 (S500), and adjusting the alignment of the electrode plate raw material 20 supplied to the first cutting unit 300 (S600).

The loading of the electrode plate raw material 20 (S100) is an operation of loading the electrode plate raw material 20 on the raw material loading unit 100.

The electrode plate raw material 20 according to an embodiment of the present disclosure may be rotatably loaded on the raw material loading unit 100 such that the unwinding direction (the X-axis direction in FIG. 1) coincides with the direction of a slitting process (the X-axis direction in FIG. 1).

Referring to FIGS. 1 and 2, the electrode plate raw material 20 according to an embodiment of the present disclosure may have coated portions 20a and uncoated portions 20b alternately and repeatedly arranged in the width direction (the Y-axis direction in FIG. 2), and may be wound into a coil shape.

For example, the coated portion 20a may be a portion where a slurry is coated on a current collector, and the uncoated portion 20b may be a portion where a slurry is not coated on the current collector, which is later formed into a tab. The coated portion 20a and the uncoated portion 20b of the electrode plate raw material 20 may have predetermined widths cd and ncd, respectively.

The coated portion 20a and the uncoated portion 20b of the electrode plate raw material 20 may be continuously formed in the unwinding direction (the X-axis direction in FIG. 2).

The alignment unit 200 according to an embodiment of the present disclosure may be a unit that supplies the electrode plate raw material 20 unwound from the raw material loading unit 100 to the first cutting unit 300, and may apply, for example, CPC or EPC.

For example, the alignment unit 200 may be applied with a system such as CPC or EPC such that the electrode plate raw material 20 unwound from the raw material loading unit 100 may be supplied to the first cutting unit 300 while having an accurate direction.

Referring to FIGS. 1 and 8, primarily cutting the electrode plate raw material 20 into the plurality of split electrode plates 21 (S200) is an operation of slitting the electrode plate raw material 20 into the plurality of split electrode plates 21 at the first cutting unit 300.

Referring to FIGS. 1 to 4, the first cutting unit 300 according to an embodiment of the present disclosure may cut the electrode plate raw material 20 supplied from the alignment unit 200, into the plurality of split electrode plates 21.

The first cutting unit 300 may cut the electrode plate raw material 20 into the plurality of split electrode plates 21, each including (e.g., consisting of) a pair of a coated portion 20a-1 and an uncoated portion 20b-1.

The coated portion 20a-1 and the uncoated portion 20b-1 of the split electrode plate 21 that is cut by the first cutting unit 300 may have predetermined widths cd1 and ncd1, respectively.

For example, the widths cd1 and ncd1 of the coated portion 20a-1 and the uncoated portion 20b-1 of the split electrode plate 21 may be less than the widths cd and ncd of the coated portion 20a and the uncoated portion 20b of the electrode plate raw material 20, respectively.

The first cutting unit 300 may include a plurality of upper splitting knives 310 and a plurality of lower splitting knives 320 each having a slitting width corresponding to the width (cd1+ncd1) of the split electrode plate 21.

The plurality of upper splitting knives 310 and the plurality of lower splitting knives 320 may include a pair of an upper splitting knife 310 and a lower splitting knife 320 in the vertical direction (the Z-axis direction in FIG. 3), and the pair of the upper splitting knife 310 and the lower splitting knife 320 may rotate in contact with each other to form one cutting point.

A plurality of upper splitting knives 310 may be arranged to be spaced apart from each other in the width direction (the Y-axis direction in FIG. 3) of the electrode plate raw material 20 by upper spacers 315, and a plurality of lower splitting knives 320 may be arranged to be spaced apart from each other in the width direction of the electrode plate raw material 20 by lower spacers 325.

Thus, the first cutting unit 300 may form a plurality of cutting points spaced apart from each other in the width direction (the Y-axis direction in FIG. 3) of the electrode plate raw material 20, and a pair of cutting points adjacent to each other on the left and right sides in the width direction of the electrode plate raw material 20 may correspond to one split electrode plate 21.

For example, the distance between a pair of cutting points of the first cutting unit 300 may be equal to the sum of the width cd1 of the coated portion 20a-1 and the width ncd1 of the uncoated portion 20b-1 of the split electrode plate 21 (i.e., cd1+ncd1).

Accordingly, the electrode plate raw material 20 supplied to the first cutting unit 300 may be cut into a plurality of split electrode plates 21 through the plurality of upper splitting knives 310 and the plurality of lower splitting knives 320, and the remaining portion of the electrode plate raw material 20 except for the plurality of split electrode plates 21 may be scrapped.

Referring to FIGS. 1 and 8, secondarily cutting the plurality of split electrode plates 21 (S300) is an operation of slitting the plurality of split electrode plates 21 cut and discharged from the first cutting unit 300 to a required width (cd2+ncd2) at the second cutting unit 500.

For example, the plurality of split electrode plates 21 supplied from the first cutting unit 300 to the second cutting unit 500 may be classified upward and downward (with respect to the Z-axis direction in FIG. 5) through the electrode plate separating unit 400 and then supplied to the second cutting unit 500.

Referring to FIGS. 1 and 5, the electrode plate separating unit 400 according to an embodiment of the present disclosure may alternately classify the plurality of split electrode plates 21 cut and discharged from the first cutting unit 300 in different directions and supply them to the second cutting unit 500.

For example, the electrode plate separating unit 400 may include the upper roller 410 and the lower roller 420. The plurality of split electrode plates 21 cut and discharged from the first cutting unit 300 may be classified upward and downward (with respect to the Z-axis in FIG. 5) through the upper roller 410 and the lower roller 420 of the electrode plate separating unit 400.

For example, the plurality of split electrode plates 21 cut and discharged from the first cutting unit 300 may be discharged in a plurality of rows from right to left in the width direction (the Y-axis direction in FIG. 5).

For example, the plurality of split electrode plates 21a in the odd-numbered rows may be classified upward through the upper roller 410, and the plurality of split electrode plates 21b in the even-numbered rows may be classified downward through the lower roller 420.

The slitting apparatus 10 according to an embodiment of the present disclosure may classify the plurality of split electrode plates 21 in different directions through the electrode plate separating unit 400 and supply the plurality of split electrode plates 21 to the second cutting unit 500, and accordingly, the second cutting unit 500 may individually adjust the slitting width of each of the plurality of split electrode plates 21a and the plurality of split electrode plates 21b, thereby minimizing slitting defects.

Referring to FIGS. 1, 4, and 6, the second cutting unit 500 according to an embodiment of the present disclosure performs a slitting process of secondarily cutting the plurality of split electrode plates 21a and the plurality of split electrode plates 21b supplied from the electrode plate separating unit 400 to a preset width (cd2+ncd2).

The second cutting unit 500 may include a plurality of slitting lines 510 and 520 that cut the plurality of split electrode plates 21a and the plurality of split electrode plates 21b that are classified and supplied in different directions through the electrode plate separating unit 400.

For example, the second cutting unit 500 may include the upper slitting line 510 that slits the plurality of split electrode plates 21a in the odd-numbered rows supplied through the upper roller 410 of the electrode plate separating unit 400, and the lower slitting line 520 that slits the plurality of split electrode plates 21b in the even-numbered rows supplied through the lower roller 420 of the electrode plate separating unit 400.

The upper slitting line 510 may include the pair of coated-side knives 511a and 513a that slit one side of the coated portions 20a-1 of the plurality of split electrode plates 21a in the odd-numbered rows, and the uncoated-side knives 511b and 513b that slit one side of the uncoated portion 20b-1 of the plurality of split electrode plates 21a in the odd-numbered rows.

The pair of coated-side knives 511a and 513a of the upper slitting line 510 may include a pair of an upper coated-side knife 511a and a lower coated-side knife 513a in the vertical direction (the Z-axis direction in FIG. 6).

The uncoated-side knives 511b and 513b of the upper slitting line 510 may include a pair of an upper uncoated-side knife 511b and a lower uncoated-side knife 513b in the vertical direction (the Z-axis direction in FIG. 6).

The pair of coated-side knives 511a and 513a and the pair of uncoated-side knives 511b and 513b of the upper slitting line 510 may be independently driven and controlled.

For example, a pair of coated-side knives 511a and 513a may be respectively connected to coated-side driving units 512a and 514a in the vertical direction (the Z-axis direction in FIG. 6), and a pair of uncoated-side knives 511b and 513b may be respectively connected to uncoated-side driving units 512b and 514b in the vertical direction (the Z-axis direction in FIG. 6).

For example, the coated-side driving units 512a and 514a and the uncoated-side driving units 512b and 514b may include respective servomotors that may be individually controlled through the control unit 800, and they may be arranged to reciprocate on one guide rail extending in the width direction (the Y-axis direction in FIG. 6).

For example, the coated-side driving units 512a and 514a and the uncoated-side driving units 512b and 514b may individually rotate the coated-side knives 511a and 513a and the uncoated-side knives 511b and 513b, respectively, while reciprocating in the width direction (the Y-axis direction in FIG. 6).

For example, the pair of coated-side knives 511a and 513a may rotate in contact with each other to form one cutting point, and the pair of uncoated-side knives 511b and 513b may also rotate in contact with each other to form one cutting point.

The distance between the cutting point of the pair of coated-side knives 511a and 513a and the cutting point of the pair of uncoated-side knives 511b and 513b in the width direction (the Y-axis direction in FIG. 6) may be set to be equal to a required slitting width (cd2+ncd2) of the plurality of split electrode plates 21a in the odd-numbered rows.

For example, a pair of coated-side driving units 512a and 514a and a pair of uncoated-side driving units 512b and 514b may reciprocate in the width direction (the Y-axis direction in FIG. 6) under driving and controlling of the control unit 800.

Thus, when the plurality of split electrode plates 21a in the odd-numbered rows are skewed in the width direction (the Y-axis direction in FIG. 6) and supplied to the upper slitting line 510, the pair of coated-side driving units 512a and 514a and the pair of uncoated-side driving units 512b and 514b may be moved in the direction in which the split electrode plates 21a are skewed, to perform slitting under driving and controlling of the control unit 800.

Accordingly, even when the plurality of split electrode plates 21a in the odd-numbered rows are skewed in the width direction and supplied to the upper slitting line 510, the split electrode plates 21a may be slit such that coated portions 20a-2 and uncoated portions 20b-2 have required widths cd2 and ncd2, respectively.

Referring to FIGS. 1, 4, and 6, the lower slitting line 520 may include the coated-side knives 521a and 523a that slit one side of the coated portions 20a-1 of the plurality of split electrode plates 21b in the even-numbered rows, and the uncoated-side knives 521b and 523b that slit one side of the uncoated portions 20b-1 of the plurality of split electrode plates 21b in the even-numbered rows.

The coated-side knives 521a and 523a of the lower slitting line 520 may include a pair of an upper coated-side knife 521a and a lower coated-side knife 523a in the vertical direction (the Z-axis direction in FIG. 6).

The uncoated-side knives 521b and 523b of the lower slitting line 520 may include a pair of an upper uncoated-side knife 521b and a lower uncoated-side knife 523b in the vertical direction (the Z-axis direction in FIG. 6).

The coated-side knives 521a and 523a and the uncoated-side knives 521b and 523b of the lower slitting line 520 may be independently driven and controlled.

For example, a pair of coated-side knives 521a and 523a may be respectively connected to coated-side driving units 522a and 524a in the vertical direction (the Z-axis direction in FIG. 6), and a pair of uncoated-side knives 521b and 523b may be respectively connected to uncoated-side driving units 522b and 524b in the vertical direction (the Z-axis direction in FIG. 6).

For example, the coated-side driving units 522a and 524a and the uncoated-side driving units 522b and 524b may include respective servomotors that may be individually controlled through the control unit 800, and may be arranged to reciprocate on one guide rail extending in the width direction (the Y-axis direction in FIG. 6).

For example, the coated-side driving units 522a and 524a and the uncoated-side driving units 522b and 524b may individually rotate the coated-side knives 521a and 523a and the uncoated-side knives 521b and 523b, respectively, while reciprocating in the width direction (the Y-axis direction in FIG. 6).

For example, the pair of coated-side knives 521a and 523a may rotate in contact with each other to form one cutting point, and the pair of uncoated-side knives 521b and 523b may also rotate in contact with each other to form one cutting point.

The distance between the cutting point of the pair of coated-side knives 521a and 523a and the cutting point of the pair of uncoated-side knives 521b and 523b in the width direction (the Y-axis direction in FIG. 6) may be set to be equal to the required slitting width (cd2+ncd2) of the plurality of split electrode plates 21b in the even-numbered rows.

For example, a pair of coated-side driving units 522a and 524a and a pair of uncoated-side driving units 522b and 524b may reciprocate in the width direction (the Y-axis direction in FIG. 6) under driving and controlling of the control unit 800.

Thus, when the plurality of split electrode plates 21b in the even-numbered rows are skewed in the width direction (the Y-axis direction in FIG. 6) and supplied to the lower slitting line 520, the pair of coated-side driving units 522a and 524a and the pair of uncoated-side driving units 522b and 524b may be moved in the direction in which the split electrode plates 21b are skewed, to perform slitting under driving and controlling of the control unit 800.

Accordingly, even when the plurality of split electrode plates 21b in the even-numbered rows are skewed in the width direction and supplied to the lower slitting line 520, the split electrode plates 21b may be slit such that coated portions 20a-2 and uncoated portions 20b-2 have required widths cd2 and ncd2, respectively.

Referring to FIGS. 1 and 8, the detecting of the plurality of split electrode plates 21a and the plurality of split electrode plates 21b supplied to the second cutting unit 500 (S400) is an operation of detecting, through the sensor unit 600, the plurality of split electrode plates 21a and the plurality of split electrode plates 21b supplied to the second cutting unit 500.

For example, the sensor unit 600 may detect boundary lines between the coated portions 20a-1 and the uncoated portions 20b-1 of the plurality of split electrode plates 21a and the plurality of split electrode plates 21b and deliver the boundary lines to the control unit 800, and the control unit 800 may drive and control the second cutting unit 500 according to degrees to which the plurality of split electrode plates 21a and the plurality of split electrode plates 21b are skewed in the width direction (the Y-axis direction in FIG. 4), which correspond to a detection signal from the sensor unit 600.

The sensor unit 600 may include an upper sensor unit 610 configured to detect the split electrode plate 21a supplied to the upper slitting line 510, and a lower sensor unit 620 configured to detect the split electrode plate 21b supplied to the lower slitting line 520.

For example, the upper sensor unit 610 may detect the plurality of split electrode plates 21a in the odd-numbered rows that are classified and supplied from the upper roller 410 to the upper slitting line 510, and the lower sensor unit 620 may detect the plurality of split electrode plates 21b in the even-numbered rows that are classified and supplied from the lower roller 420 to the lower slitting line 520.

The upper sensor unit 610 may detect the boundary lines between the coated portions 20a-1 and the uncoated portions 20b-1 of the plurality of split electrode plates 21a in the odd-numbered rows, and deliver a detection signal to the control unit 800, and the lower sensor unit 620 may detect the boundary lines between the coated portions 20a-1 and the uncoated portions 20b-1 of the plurality of split electrode plates 21b in the even-numbered rows, and deliver a detection signal to the control unit 800.

For example, the upper sensor unit 610 and the lower sensor unit 620 may each include a CCD camera, but various vision devices capable of detecting the boundary lines between the coated portions 20a-1 and the uncoated portions 20b-1 of the plurality of split electrode plates 21a and the plurality of split electrode plates 21b may be applied.

Referring to FIGS. 1 and 8, controlling the driving of the second cutting unit 500 (S500) is an operation in which the control unit 800 receives information about the plurality of split electrode plates 21a and the plurality of split electrode plates 21b detected by the sensor unit 600 and controls the driving of the second cutting unit 500.

For example, the plurality of split electrode plates 21a and the plurality of split electrode plates 21b supplied to the second cutting unit 500 may be skewed to one side in the width direction (the Y-axis direction in FIG. 6) due to slitting width defects in the first cutting unit 300 or slurry coating width errors in a process of forming the coated portions.

For example, the sensor unit 600 may detect boundary lines between the coated portions 20a-1 and the uncoated portions 20b-1 of the plurality of split electrode plates 21a and the plurality of split electrode plates 21b, and transmit the boundary lines to the control unit 800.

The control unit 800 may determine the skew of the plurality of split electrode plates 21a and the plurality of split electrode plates 21b in the width direction (the Y-axis direction in FIG. 1) based on an error in the boundary lines detected by the sensor unit 600, and compensate and control a slitting position of the second cutting unit 500.

Thus, even when the plurality of split electrode plates 21a and the plurality of split electrode plates 21b are skewed to one side in the width direction (Y-axis direction in FIG. 1) and improperly supplied to the second cutting unit 500, the control unit 800 may compensate and adjust a slitting position of the second cutting unit 500 such that the plurality of split electrode plates 21a and the plurality of split electrode plates 21b are accurately slit to a required width by the second cutting unit 500.

Referring to FIGS. 1 and 8, the adjusting of the alignment of the electrode plate raw material 20 supplied to the first cutting unit 300 (S600) is an operation in which the control unit 800 receives information about the plurality of split electrode plates 21a and the plurality of split electrode plates 21b detected by the sensor unit 600 and controls the driving of the alignment unit 200.

For example, the control unit 800 may receive information about the plurality of split electrode plates 21a and the plurality of split electrode plates 21b detected by the sensor unit 600, and determine the skew of the plurality of split electrode plates 21a and the plurality of split electrode plates 21b in the width direction (the Y-axis direction in FIG. 4).

The control unit 800 may determine the skew of the plurality of split electrode plates 21a and the plurality of split electrode plates 21b in the width direction, and drive and control the alignment unit 200 in the direction opposite to the skew of the plurality of split electrode plates 21a and the plurality of split electrode plates 21b.

The control unit 800 may further improve the precision of the slitting width in the second cutting unit 500 by adjusting the position, in the width direction (the Y-axis direction in FIG. 1), of the electrode plate raw material 20 supplied to the first cutting unit 300, through the alignment unit 200.

The formation of the coated portion includes a rolling process to increase adhesion with an electrode current collector and increase the active material capacity density. A rolled electrode plate may be dried and then cut through a slitting apparatus to a predetermined width for use.

In related-art slitting apparatuses, there is a problem in that the widths of coated portions and uncoated portions of electrode plates supplied to the slitting apparatus are unevenly distributed during slitting due to width errors of the coated portions. In addition, because the width spacing between knives of the slitting apparatus is fixed based on spacers, it is difficult to adjust a slitting position of an electrode plate even when there is a slitting defect.

According to embodiments, it is possible to minimize slitting defects by individually adjusting the slitting widths of coated and uncoated portions of an electrode plate, and to improve the precision of slitting an electrode plate by enabling alignment correction of the electrode plate during a slitting process.

However, the effects of the present disclosure are not limited to the foregoing, and other unmentioned effects would be clearly understood by those of skill in the art from the following description.

Although the present disclosure has been described above by means of limited embodiments and drawings, the present disclosure is not limited thereto.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

### Reference Signs List

- 1: Electrode plate slitting apparatus
- 20: Electrode plate raw material
- 20a: Coated portion of electrode plate raw material
- 20b: Uncoated portion of electrode plate raw material
- 20a-1: Coated portion of split electrode plate before second cutting
- 20b-1: Uncoated portion of split electrode plate before second cutting
- 20a-2: Coated portion of split electrode plate after second cutting
- 20b-2: Uncoated portion of split electrode plate after second cutting
- 21: Split electrode plates
- 21a: Split electrode plates in odd-numbered rows before second cutting
- 21b: Split electrode plates in even-numbered rows before second cutting
- 22a: Slit split electrode plates in odd-numbered rows after second cutting
- 22b: Slit split electrode plates in even-numbered rows after second cutting
- 23a: Coil electrode plates from odd-numbered rows
- 23b: Coil electrode plates from even-numbered rows
- 100: Raw material loading unit
- 200: Alignment unit
- 300: First cutting unit
- 310: Upper splitting knife
- 315: Upper spacer
- 320: Lower splitting knife
- 325: Lower spacer
- 400: Electrode plate separating unit
- 410: Upper roller
- 420: Lower roller
- 500: Second cutting unit
- 510: Upper slitting line
- 511a: Upper coated-side knife (upper slitting line)
- 511b: Upper uncoated-side knife (upper slitting line)
- 512a: Upper coated-side driving unit
- 512b: Upper uncoated-side driving unit
- 513a: Lower coated-side knife (upper slitting line)
- 513b: Lower uncoated-side knife (upper slitting line)
- 514a: Lower coated-side driving unit
- 514b: Lower uncoated-side driving unit
- 520: Lower slitting line
- 521a: Upper coated-side knife (lower slitting line)
- 521b: Upper uncoated-side knife (lower slitting line)
- 522a: Upper coated-side driving unit (lower slitting line)
- 522b: Upper uncoated-side driving unit (lower slitting line)
- 523a: Lower coated-side knife (lower slitting line)
- 523b: Lower uncoated-side knife (lower slitting line)
- 524a: Lower coated-side driving unit (lower slitting line)
- 524b: Lower uncoated-side driving unit (lower slitting line)
- 600: Sensor unit
- 610: Upper sensor unit
- 620: Lower sensor unit
- 700: Winding unit
- 710: Upper winding unit
- 720: Lower winding unit
- 800: Control unit
- cd: Width of coated portion (raw material)
- ncd: Width of uncoated portion (raw material)
- cd1: Width of coated portion before second cutting
- ncd1: Width of uncoated portion before second cutting
- cd2: Width of coated portion after second cutting
- ncd2: Width of uncoated portion after second cutting
- S100: Step of loading electrode plate raw material
- S200: Step of primarily cutting into split electrode plates
- S300: Step of secondarily cutting split electrode plates
- S400: Step of detecting split electrode plates
- S500: Step of controlling second cutting unit
- S600: Step of adjusting alignment of raw material

## Claims

1. An electrode plate slitting apparatus (1), comprising:
a first cutting unit (300) configured to cut a supplied electrode plate raw material (20) into a plurality of split electrode plates (21);
a second cutting unit (500) configured to cut the plurality of split electrode plates (21);
a sensor unit (600) configured to detect the plurality of split electrode plates (21) supplied to the second cutting unit (500), resulting in detected split electrode plates (21); and
a control unit (800) configured to:
receive information about the detected split electrode plates (21), and
control driving of the second cutting unit (500).

2. The electrode plate slitting apparatus (1) as claimed in claim 1, wherein:
the electrode plate raw material (20) has coated portions (20a) and uncoated portions (20b),
the sensor unit (600) is further configured to detect a boundary line between a coated portion (20a-1) and an uncoated portion (20b-1) of the plurality of split electrode plates (21), and
the control unit (800) is further configured to compensate and drive and control the second cutting unit (500) according to an error in the boundary line detected by the sensor unit (600).

3. The electrode plate slitting apparatus (1) according to any of the preceding claims, wherein:
the plurality of split electrode plates (21) are alternately separated in different directions prior to cutting by the second cutting unit (500), resulting in separated split electrode plates (21a, 21b), and
the second cutting unit (500) comprises a plurality of slitting lines (510, 520) arranged on paths along which the plurality of separated split electrode plates (21a, 21b) are separated, respectively.

4. The electrode plate slitting apparatus (1) as claimed in claim 3, wherein each of the plurality of slitting lines (510, 520) comprises:
a coated-side knife (511a, 513a, 521a, 523a) configured to slit one side of a coated portion (20a-1) of each of the plurality of split electrode plates (21); and
an uncoated-side knife (511b, 513b, 521b, 523b) configured to slit one side of an uncoated portion (20b-1) of each of the plurality of split electrode plates (21).

5. The electrode plate slitting apparatus as claimed in claim 4, wherein the coated-side knife (511a, 513a, 521a, 523a) and the uncoated-side knife (511b, 513b, 521b, 523b) are independently driven and controlled.

6. The electrode plate slitting apparatus (a) according to any of claims 3 to 5, wherein the sensor unit (600) comprises a plurality of sensor units (610, 620) configured to respectively detect the plurality of split electrode plates (21) supplied to the plurality of slitting lines (510, 520).

7. The electrode plate slitting apparatus (1) according to any of the preceding claims, further comprising an alignment unit (200) configured to adjust alignment of the supplied electrode plate raw material (20).

8. The electrode plate slitting apparatus (1) as claimed in claim 7, wherein the alignment unit (200) is further configured to adjust the alignment of the supplied electrode plate raw material (20) based on the information about the plurality of split electrode plates (21) detected by the sensor unit (600).

9. An electrode plate slitting method, preferably performed by an electrode plate slitting apparatus (1) configured according to any of the previous claims, the method comprising:
supplying an electrode plate raw material (20) to a first cutting unit (300);
cutting, by the first cutting unit (300), the electrode plate raw material (20) into a plurality of split electrode plates (21);
supplying the plurality of split electrode plates (21) to a second cutting unit (500);
cutting, by the second cutting unit (500), the plurality of split electrode plates (21);
detecting, by a sensor unit (600), the plurality of split electrode plates (21) supplied to the second cutting unit (500); and
controlling, by a control unit (800), driving of the second cutting unit (500) based on information about the plurality of split electrode plates (21) detected by the sensor unit (600).

10. The electrode plate slitting method as claimed in claim 9, further comprising:
detecting, by the sensor unit (600), a boundary line between a coated portion (20a-1) and an uncoated portion (20b-1) of each of the plurality of split electrode plates (21), and
compensating, driving and controlling the second cutting unit (500) according to an error in the boundary line detected by the sensor unit (600).

11. The electrode plate slitting method as claimed in any of claims 9 or 10, further comprising alternately separating the plurality of split electrode plates (21), resulting in separated split electrode plates (21a, 21b), in different directions and supplying the separated split electrode plates (21a, 21b) to the second cutting unit (500), wherein the second cutting unit (500) comprises a plurality of slitting lines (510, 520) arranged on paths along which the plurality of separated split electrode plates (21a, 21b) are separated, respectively.

12. The electrode plate slitting method as claimed in claim 11, further comprising:
slitting, by a coated-side knife (511a, 513a, 521a, 523a), one side of a coated portion (20a-1) of each of the plurality of split electrode plates (21); and
slitting, by an uncoated-side knife (511b, 513b, 521b, 523b), one side of an uncoated portion (20b-1) of each of the plurality of split electrode plates (21).

13. The electrode plate slitting method as claimed in any of claims 11 or 12, wherein the detecting comprises detecting, by a plurality of sensor units (610, 620), the plurality of split electrode plates (21) supplied to the plurality of slitting lines (510, 520).

14. The electrode plate slitting method as claimed in any of claims 9 to 13, further comprising adjusting, by an alignment unit (200), alignment of the electrode plate raw material (20) supplied to the first cutting unit (300).

15. The electrode plate slitting method as claimed in claim 14, wherein the adjusting performed by the alignment unit (200) is based on the information about the plurality of split electrode plates (21) detected by the sensor unit (600).
